# EUROPEAN PATENT SPECIFICATION

(11) **EP 2 316 010 B1**
(45) Date of publication and mention of the grant of the patent: **16.03.2022**
(21) Application number: 09811808.6
(22) Date of filing: 26.08.2009
(51) Int. Cl.: G01N 1/06, G01N 1/36

(54) **TISSUE CASSETTE AND METHOD FOR PREPARING TISSUE SAMPLES**
GEWEBEKASSETTE UND VERFAHREN ZUR PRÄPARATION VON GEWEBEPROBEN
CASSETTE DE TISSU ET MÉTHODE DE PRÉPARATION D'ÉCHANTILLONS TISSULAIRES

(30) Priority: 27.08.2008 US 136316 P
(43) Date of publication of application: 04.05.2011
(73) Proprietor: The University of Miami, Miami, FL 33136 (US)
(72) Inventor: MORALES, Azorides, R., Coral Gables FL 33156 (US)
(74) Representative: Predazzi, Valentina
(86) International application number: PCT/US2009/004850
(87) International publication number: WO 2010/027430

(56) References cited:
- EP-A2- 1 595 502
- WO-A1-2005/103685
- GB-A- 2 278 441
- US-A- 4 801 553
- US-A- 5 782 747
- US-A1- 2004 004 075
- US-A1- 2005 147 538
- US-A1- 2006 127 956
- US-A1- 2006 239 968
- US-A1- 2007 166 834
- US-A1- 2008 045 859
- US-B1- 6 207 408
- US-B2- 6 513 803

## Description

### CROSS-REFERENCE TO RELATED APPLICATIONS

This application claims the benefit of provisional Application No. 61/136,316, filed August 27, 2008.

### FIELD OF THE INVENTION

The present invention relates to grossing tissue and the preparation of a tissue specimen suitable for processing for histology, histochemistry, antibody binding, genetic analysis, or the like, as defined in the appended set of claims. A cassette to facilitate grossing and to hold the specimen, and a method for its use are provided.

### BACKGROUND OF THE INVENTION

Pathology grossing tools and boards are known in the art for preparing a tissue sample, which was obtained by excision/resection of a body part or biopsy, to process for histology, genetic analysis, histochemistry, or the like.

For example, U.S. Patent 6,207,408 describes a process for rapid, continuous flow histological processing of tissues for microscopic examination, from fixation to impregnation. In an embodiment, a pathology grossing tool including flat plates or blocks at the end of otherwise conventional forceps may be used for producing a tissue specimen. The sizes of the tissue specimens are not standardized; in particular, the tissue specimens suffer from non-uniformity in thickness. There is also the danger of the knife or scalpel slipping and injuring the person holding the tool.

U.S. Patent 6,513,803 describes a pathology grossing board having one or more tissue-receiving depressions formed therein. A knife-guiding assembly is provided to guide a knife or scalpel blade along the surface of the grossing board to cut a tissue sample to a desired thickness as defined by the depth of the respective depression. The board avoids personal injury by (1) restricting movement of the blade with a knife-guiding assembly and (2) applying force with a tissue clamp in a direction transverse to and above the cutting plane.

U.S. Patent 7,219,884 describes a different type of pathology grossing tool including multiple tines for engaging and holding a tissue in place to allow tissue samples of a prescribed thickness to be prepared. The size of the tissue sample is defined by the tines.

GB 2 278 441 A discloses an adaptor, holder or container for processing very small tissue samples in histology processing cassettes comprising a lid and a base. The lid and the base may be engaged together to form a chamber therebetween.

US 2005/147538 A1 discloses a cassette and embedding assembly for handling and holding tissue samples during processing, embedding and microtome procedures.

US 4 801 553 A relates to methods of and apparatus for preparing tissue specimens for microtome sectioning. In particular, it discloses a cassette for holding a tissue specimen comprising a body portion and a separable portion which snap together to enclose a specimen in a mould space of the cassette.

The present invention is directed to an improved pathology grossing tool and board. They provide tissue specimens suitable for histology, histochemistry, antibody binding, genetic analysis, or the like. In addition, it may reduce or eliminate the danger of personal injury in at least an optional embodiment of the invention. A cassette tailored to facilitate the grossing of tissue and to hold the grossed tissue for subsequent processing may be used alone, or together with the tool or board. Further objectives and advantages of the invention are described below.

### SUMMARY OF THE INVENTION

The subject of the present invention is as defined in the appended claims. It's herein disclosed, as useful to understand the present invention,a pathology grossing tool for preparing tissue samples including forceps having a pair of ends and a pair of plates provided to respective ends of the forceps. At least one of the plates includes a flat-cutting surface and a tissue-receiving depression extending downwardly from the flat-cutting surface. The plates are adapted to hold a tissue in place and to allow preparation of a tissue sample of prescribed thickness.

Another aspect provides a method for preparing a tissue specimen ("grossing") which includes clamping a tissue sample with forceps between a pair of plates, one of which includes a flat-cutting surface and a tissue-receiving depression extending downwardly from the flat-cutting surface; and drawing a blade of a knife or scalpel through the tissue sample and along the flat-cutting surface to cut the tissue sample disposed in the tissue-receiving depression from the remainder of the tissue sample and to provide a tissue specimen having a thickness substantially equal to the depth of the tissue-receiving depression.

Yet another (not claimed) aspect relates to a pathology grossing tool for preparing tissue samples including forceps having a pair of ends and a pair of plates provided to respective ends of the forceps. At least one of the plates includes a cassette-receiving depression structured to receive a base of a tissue cassette. The base includes a flat-cutting surface and a tissue-receiving depression extending downwardly from the flat-cutting surface. The plate opposite the base is adapted to hold a tissue in place within the base of the cassette and to allow preparation of a tissue sample of prescribed thickness. A method for preparing a tissue specimen ("grossing") is provided which includes clamping a tissue sample with forceps between the base of the cassette and the opposite plate, and drawing a blade of a knife or scalpel through the tissue sample and along a tissue-cutting edge to cut the tissue sample disposed in the base from the remainder of the tissue sample and to provide a tissue specimen having a thickness substantially equal to the depth of the base. In contrast to a tool that does not include the base, the thin tissue specimen is prepared in its resting place within the cassette after a lid is attached to the base.

A second (not claimed) aspect relates to a pathology grossing board including at least one cassette-receiving slot adapted to accommodate the base of a tissue cassette, and blade guides provided on opposing sides of the at least one slot for guiding the blade of a knife or scalpel along the base within the slot. The base includes a flat-cutting surface and a tissue-receiving depression extending downwardly from the flat-cutting surface.

Another (not claimed) aspect provides a method for preparing a tissue specimen ("grossing") which includes holding a tissue sample against a base, which includes a flat-cutting surface and a tissue-receiving depression extending downwardly from the flat-cutting surface; and drawing a blade of a knife or scalpel through the tissue sample within the blade guides and along the flat-cutting surface to cut the tissue sample disposed in the base from the remainder of the tissue sample and to provide a tissue specimen having a thickness substantially equal to the base. The tissue sample may be held against the base by applying force with a finger or a tool.

A third aspect relates to a tissue cassette including a base with side walls and a bottom wall that define a chamber adapted to receive a tissue, and a lid provided to the base and adapted to cover the chamber to retain a tissue specimen within the chamber. The bottom wall of the base is positioned with respect to the side walls to provide a chamber depth of less than 5 mm. An optional aspect of the invention includes holding the cassette using the above pathology grossing tool or board. In this optional aspect, providing a tissue specimen directly into the base of the cassette avoids damage to the tissue by handling it with forceps, prevents contamination between sequentially grossed tissues, and standardizes processing of tissues intended for histology, histochemistry, antibody binding, genetic analysis, or the like.

In any of the above, an optional aspect of the invention is a knife stop which extends upward from the flat-cutting surface to prevent the blade of the knife or scalpel from injuring the person cutting the tissue sample.

Other aspects, features, and advantages of this invention will become apparent from the following description when taken in conjunction with the accompanying drawings, which are a part of this disclosure and which illustrate, by way of example, principles of this invention.

### BRIEF DESCRIPTION OF THE DRAWINGS

The accompanying drawings facilitate an understanding of various specific embodiments of this invention. Figures 1 to 12 , 18 and 19 describe embodiments not covered by the claimed invention.
Figure 1 is a perspective view of a pathology grossing tool according to an embodiment of the present invention.
Figure 2 is another perspective view of the pathology grossing tool of Fig. 1.
Figure 3 is a side view of the pathology grossing tool of Fig. 1.
Figure 4 is a perspective view of the pathology grossing tool of Fig. 1 holding a tissue sample prior to cutting.
Figure 5 is a perspective view of the pathology grossing tool of Fig. 1 clamping a tissue sample while cutting.
Figure 6 is a cross-sectional view through line 6-6 of Fig. 5.
Figure 7 is a perspective view of the pathology grossing tool of Fig. 1 clamping a tissue sample and immersing the same in a solution.
Figure 8A is a perspective view of a pathology grossing tool with plastic plates according to another embodiment of the present invention.
Figure 8B is a schematic view showing the plastic plates of Fig. 8 A being joined together according to an embodiment of the present invention.
Figure 8C is a schematic view showing the plastic plates of Fig. 8A being joined and secured together by an external collar according to an embodiment of the present invention.
Figure 8D is a schematic view showing the plastic plates of Fig. 8A being joined and secured together by an integral hinge and clip structure according to an embodiment of the present invention.
Figure 9 is a perspective view of a pathology grossing tool according to another embodiment of the present invention.
Figure 10 is another perspective view of the pathology grossing tool of Fig. 9.
Figure 11 is a perspective view of the pathology grossing tool of Fig. 9 holding a tissue cassette and tissue sample prior to cutting.
Figure 12 is a cross-sectional view of the pathology grossing tool of Fig. 9 while holding a tissue cassette and tissue sample prior to cutting.
Figure 13A is an exploded view of a conventional cassette with a spacer according to an embodiment of the present invention.
Figure 13B is a perspective view of the cassette of Fig. 13A with the lid in a closed position.
Figure 14A is a perspective view of a tissue cassette according to an embodiment of the present invention.
Figure 14B is another perspective view of the tissue cassette of Fig. 14A.
Figure 15 is a perspective view of the cassette of Fig. 14A with the lid in a closed position.
Figure 16A is a perspective view of a tissue cassette according to another embodiment of the present invention.
Figure 16B is another perspective view of the tissue cassette of Fig. 16A.
Figure 17A is a perspective view of a tissue cassette according to another embodiment of the present invention.
Figure 17B is another perspective view of the tissue cassette of Fig. 17A.
Figure 18 is a perspective view of a grossing board according to an embodiment of the present invention, the grossing board holding a tissue cassette and tissue sample prior to cutting.
Figure 19 is another perspective view of the grossing board of Fig. 18, the grossing board holding a tissue cassette and tissue sample following cutting.
Figure 20 is a perspective view of joined plates or closed cassette stored in a cassette-holding rack and immersed in a solution according to an embodiment of the present invention.

### DESCRIPTION OF SPECIFIC EMBODIMENTS OF THE INVENTION

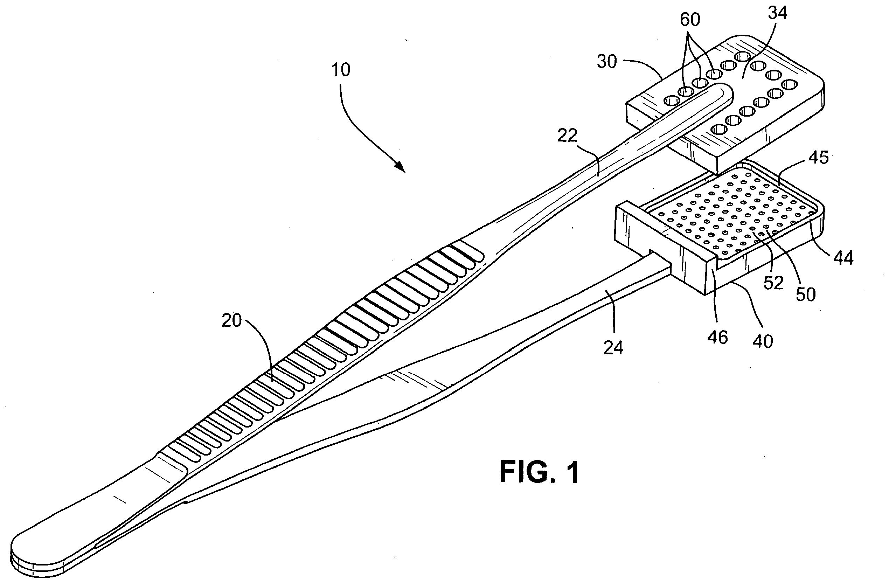

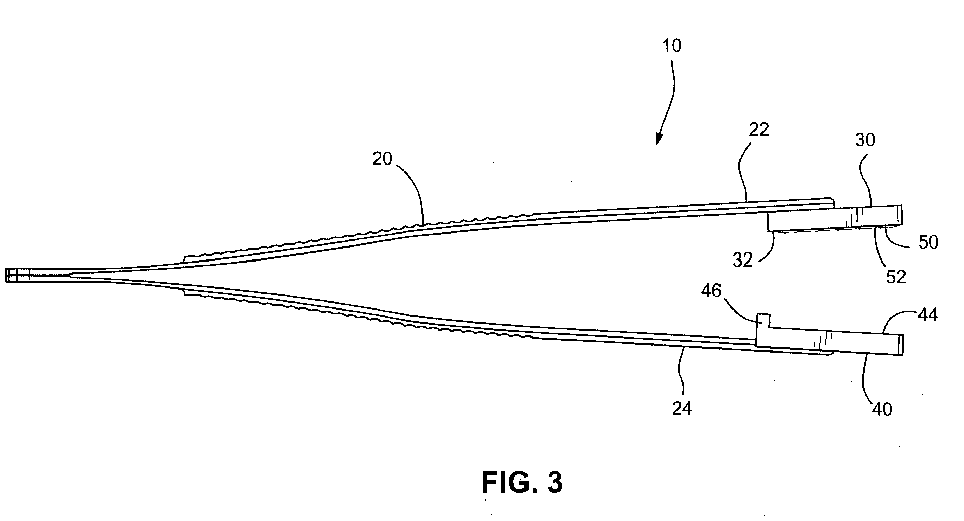

Figs. 1-3 illustrate a pathology grossing tool 10 which is useful to understand the present invention. The pathology grossing tool 10 is structured to hold a tissue in place and allow a thin tissue specimen of a prescribed thickness to be prepared.

In the illustrated embodiment, the pathology grossing tool 10 includes forceps 20 having a pair of ends 22, 24, a first plate 30 provided to one of the ends 22, 24, and a second plate 40 provided to the other of the ends 22, 24. In use, the tissue to be cut may be clamped between the plates 30, 40 and a grossing knife or scalpel passed between the plates 30, 40 to slice the tissue, as described in greater detail below. An optional indented portion of the forceps, where the forceps may be held, is shown in the drawings. The tool may be constructed of a metal, alloy thereof, or another corrosion-resistant material. For example, surgical stainless steel (i.e., an iron/carbon alloy containing 12-20% chromium, 0.2-3.0% molybdenum, and 8-12% nickel) or a hard plastic may be used. The materials used for prototyping a model by machining and the like (e.g., aluminum or brass) may differ from those used for producing the finalized tool by casting, forging, pressing, etc. (e.g., stainless steel or hard plastic).

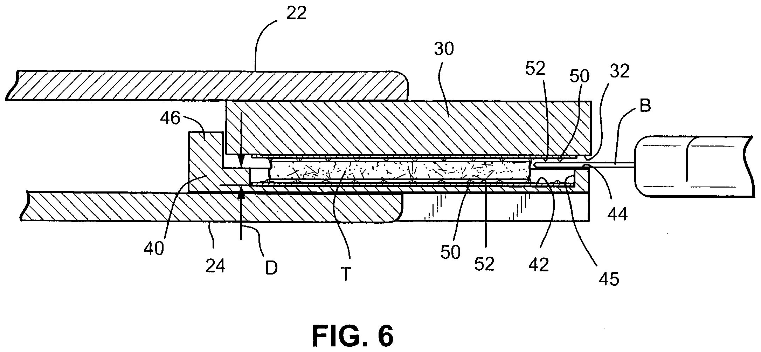

The first and second plates are generally rectangular (e.g., about 25 to 45 mm long and about 15 to 35 mm wide). The first plate 30 provides a flat, clamping surface 32 and the second plate 40 includes a tissue-receiving depression 45 (e.g., generally a rectangular- or square-shaped depression, although other shapes such as a circular depression may be used, approximating the final two-dimensional shape of the tissue specimen) to facilitate preparing tissue samples of a prescribed thickness. The tissue-receiving depression 45 provides a lower surface 42 that is substantially parallel to a flat-cutting surface 44 surrounding the depression (e.g., see Figs. 1 and 6). Such arrangement provides the tissue-receiving depression 45 with a substantially uniform depth.

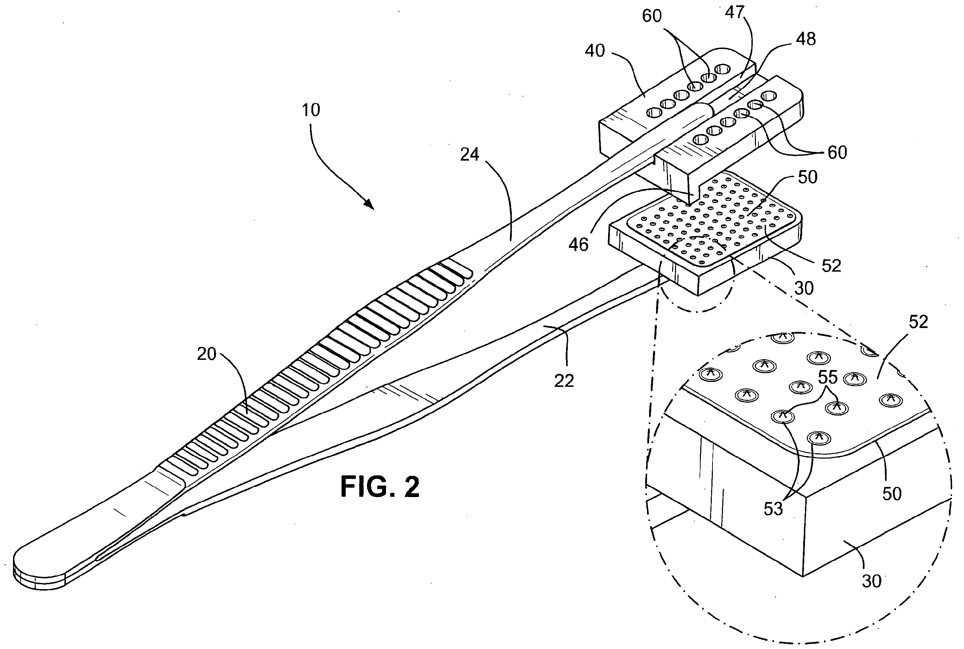

A tissue support 50 is provided to each of the plates 30, 40 for engaging and holding a tissue to be prepared. Specifically, a tissue support 50 is provided to the clamping surface 32 of the first plate 30, and a tissue support 50 is provided to the lower surface 42 of the depression 45 of the second plate 40. As best shown in the enlarged portion of Fig. 2, the tissue support 50 provides a textured surface 52 including a series of protrusions 53 (e.g., evenly distributed over the support) that are adapted to engage the tissue so as to retain or hold the tissue in place. In use, the clamping force provided by the forceps 20 along with the textured tissue support 50 firmly hold the tissue in place to facilitate cutting of the tissue.

In the illustrated embodiment, each tissue support 50 is in the form of a flat piece of perforated, dimpled metal (e.g., similar to that used in a food grater) that is secured to each of the respective plates 30, 40 in a suitable manner, e.g., adhesive, welding, etc. In an alternative embodiment, texturing may be cut or etched directly to the respective surfaces 32, 42 of the plates 30, 40.

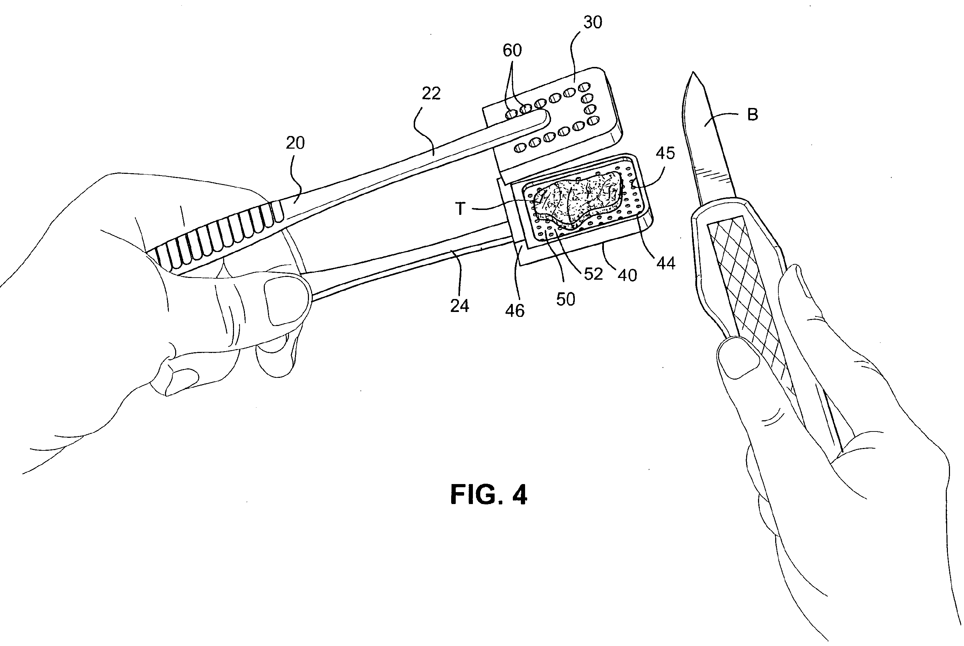

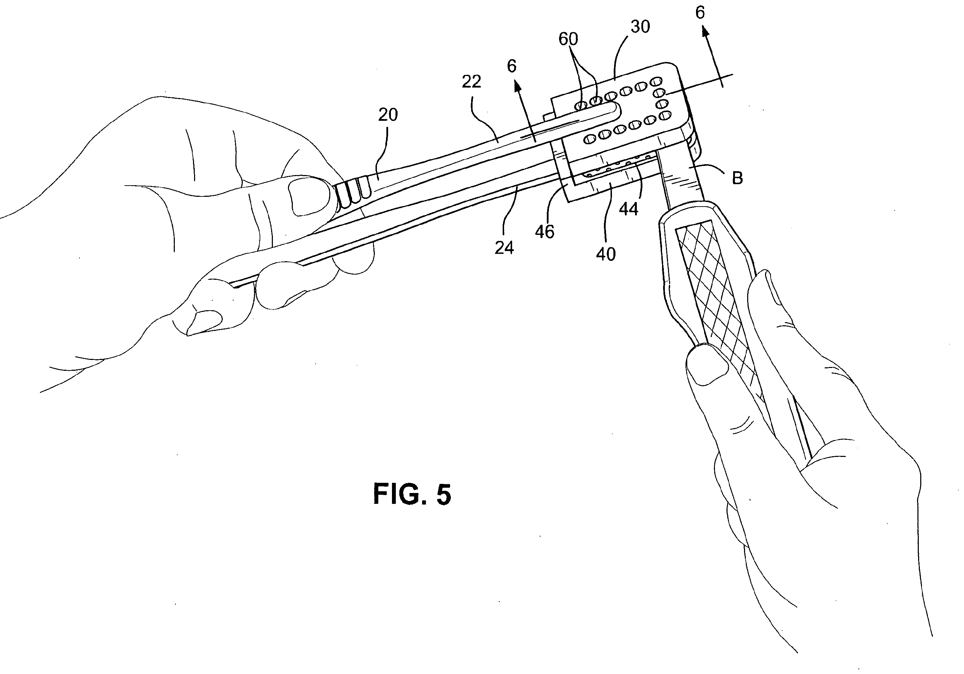

The flat-cutting surface 44 surrounding the tissue-receiving depression 45 provides a knife-guiding surface against which a grossing knife or scalpel bears when the tissue is being cut. During grossing, a tissue T to be sampled is positioned on the second plate 40 (see Fig. 4) and the forceps 20 are manually held to clamp the tissue T between the plates 30, 40 with generally uniform pressure distribution and effectively hold the tissue T in place (see Figs. 5 and 6). In practice, the hand holding the forceps 20 normally should be gloved to protect the person cutting the tissue and to prevent contamination of the tissue. As shown in Figs. 5 and 6, the blade B of a knife or scalpel is placed against and slid along the cutting surface 44 of the second plate 40 to cut the tissue disposed in the depression 45 from the remainder of the tissue and provide a thin tissue specimen of generally uniform thickness (i.e., about the depth of the depression 45).

The tissue-receiving depression 45 may be of any suitable depth D, e.g., from 0.5 mm to 5.0mm, as shown in Fig. 6. A preferred thickness is obtained by a depth from 1.0 mm to 2.0 mm, or about 1.5 mm. In an alternative embodiment, both plates 30, 40 may include a tissue-receiving depression, each having a different depth to produce tissue samples with different thicknesses. In another alternative embodiment, the depth of the tissue-receiving depression 45 may be adjustable, e.g., tissue support 50 may be movably mounted to the second plate 40 to allow selective adjustment of the depth.

The second plate 40 is slightly longer than the first plate 30 and includes a ledge 46 adjacent a distal edge of the depression 45. After the blade B has passed across the depression 45 and hence through the tissue T, i.e., engagement of the blade B with the ledge 46 completes the cutting process. In use, the ledge 46 acts as a knife or blade stop to prevent the blade B from cutting the hand holding the forceps 20. As illustrated, the ledge 46 is offset from the distal edge of the first plate 30 to prevent engagement as the plates 30, 40 are clamped towards one another in use (e.g., see Figs. 5 and 6).

In the illustrated embodiment, the forceps 20 are conventional, handheld forceps (e.g., constructed of stainless steel) with a non-locking arrangement. The non-locking forceps 20 are hinged at one end. It should, however, be appreciated that the plates 30, 40 may be adapted for use with other suitable forceps arrangements, e.g., forceps hinged in the middle, locking forceps arrangement, etc.

The plates 30, 40 may be permanently secured (e.g., adhesive, welding, etc.) or removably secured (e.g., mechanical interlock, fasteners, etc.) to respective ends 22, 24 of the forceps 20. In the illustrated embodiment, the first plate 30 includes a relatively flat, rear surface 34 for engaging the relatively flat, clamping surface of the forceps end 22 (see Fig. I), and the rear surface of the second plate 40 includes a groove 47 with a relatively flat, lower surface 48 along its length for engaging and aligning with the relatively flat, clamping surface of the forceps end 24 (see Fig. 2). It should be appreciated that both plates may include relatively flat or grooved rear surfaces.

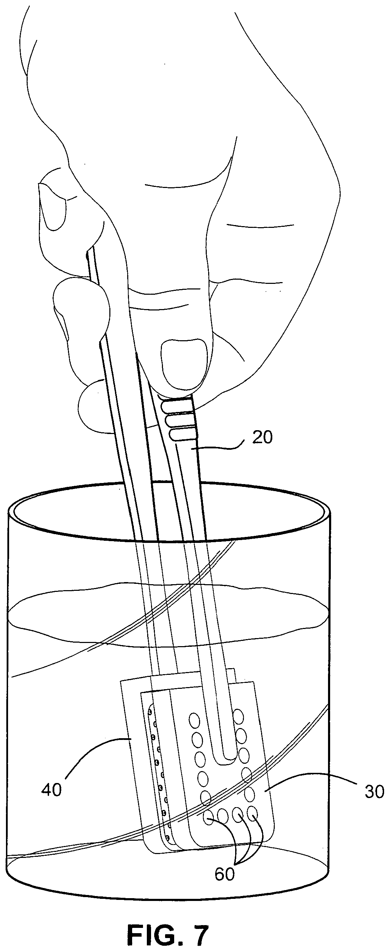

Each of the plates 30, 40 includes a plurality of openings 60 therethrough (e.g., see Figs. 1 and 2). In addition, each protrusion 53 of the textured tissue support 50 includes an opening 55 (e.g., see enlarged portion in Fig. 2), e.g., at its peak. Such openings 60, 55 provide passages through the plates 30, 40 which allows a tissue clamped between the plates 30, 40 to be adequately exposed to a fluid (e.g., solution, gas, etc.). For example, as shown in Fig. 7, the plates 30, 40 of the tool 10 may be immersed or swirled in a solution to contact and/or impregnate the tissue with the solution.

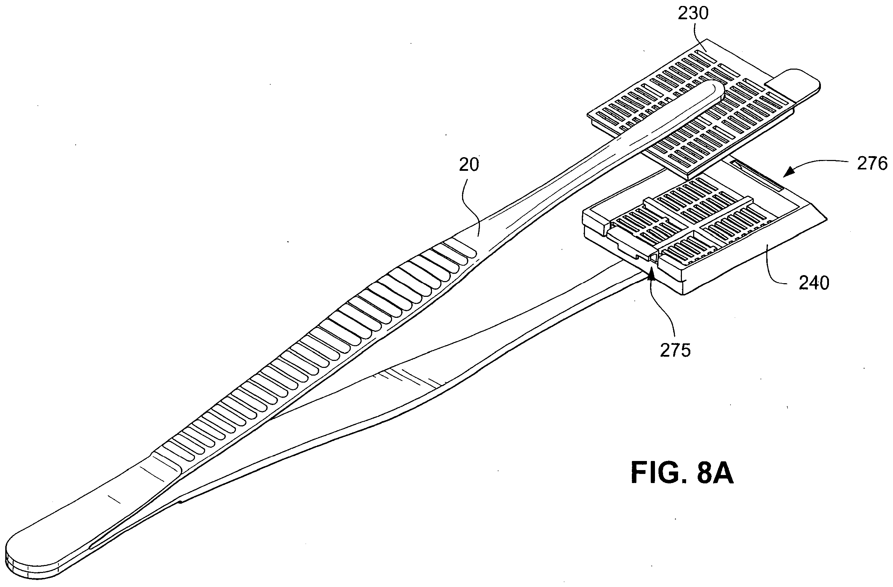

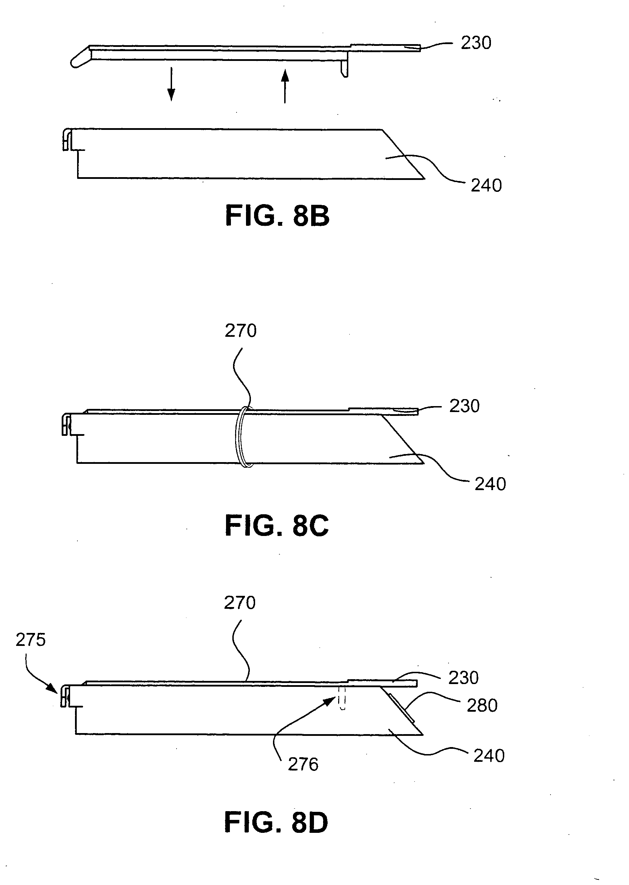

For removable plates, they may be conveniently constructed of hard plastic and reversibly secured to stainless steel forceps, or transiently secured to hard plastic forceps until they are snapped off the forceps after the tissue is cut. Fig. 8A is an exemplary perspective view showing plastic plates 230, 240 (e.g., lid and base from a conventional histological cassette) secured to respective ends of forceps 20. After being removed from the forceps, as schematically shown in Fig. 8B, the plates 230, 240 may include complimentary structures that allow the plates 230, 240 to be joined together to hold the tissue specimen therein. The plates 230, 240 may be secured to one another with an external collar 270 (see Fig. 8C). Alternatively, as shown in Figs. 8A and 8D, the plates 230, 240 may resemble a histological tissue cassette and include an integral interlocking hinge 275 and clip structure276 to join the plates to one another. A label 280 (see Fig. 8D) identifying the tissue specimen (e.g., alphanumeric, barcode, or RFID) may be attached to a portion of the joined plates 230,240 (e.g., along the angled front wall of the base).

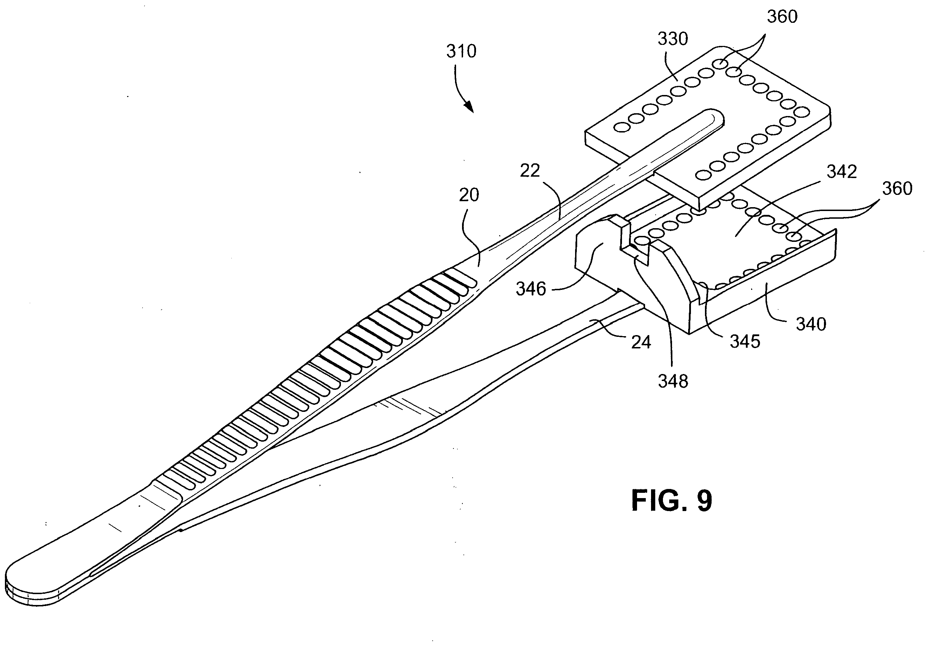

Figs. 9-12 illustrate a pathology grossing tool 310 which is useful to understand the present invention. In this embodiment, the grossing tool 310 is structured to hold a cassette (either conventional or a cassette of the present invention), and uses the cassette to hold the tissue in place while cutting.

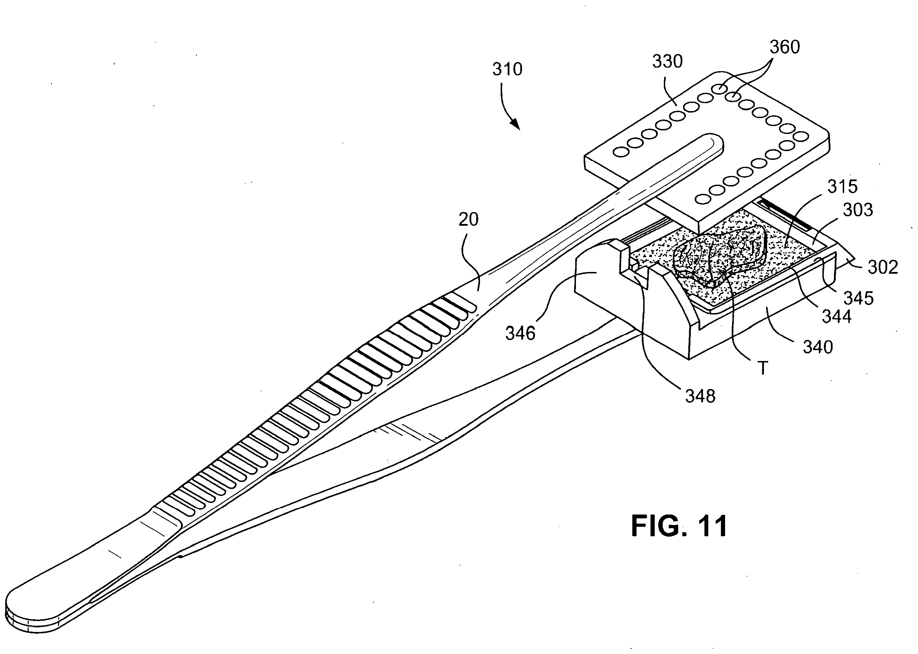

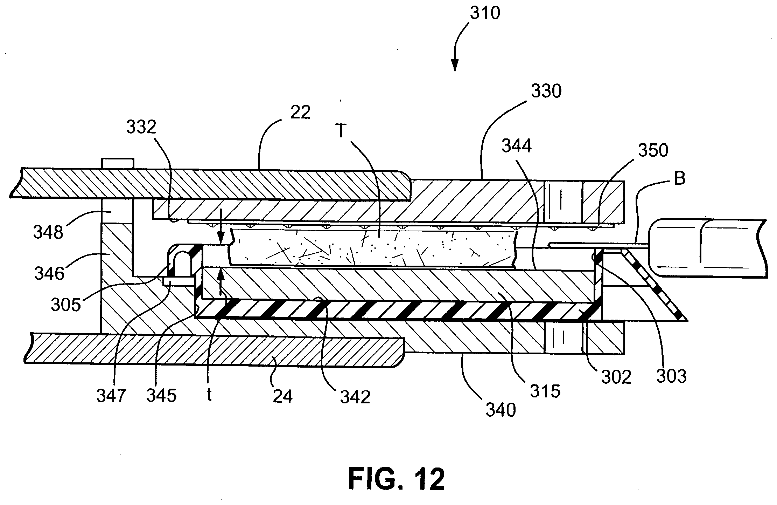

As illustrated, the grossing tool 310 includes forceps 20 with a first plate 330 provided to one of the ends 22, 24 and a second plate 340 provided to the other of the ends 22, 24. The first plate 330 provides a flat, clamping surface 332 and the second plate 340 includes an open-ended cassette-receiving depression 345 structured to receive the base 302 of a cassette 300 (e.g., see Figs. 11 and 12).

The cassette-receiving depression 345 provides a substantially flat, lower surface 342 to support the cassette base. Also, the width of the depression 345 corresponds to the width of the cassette base 302. The length of the depression 345 corresponds at least to the length of the cassette base 302 (e.g., the length of the depression is at least as long as the chamber 303 in the cassette base 302). The cassette base 302 may be aligned and maintained within the second plate 340 (e.g., by a friction fit). In addition, the end wall of the depression 345 may include a recess 347 (e.g., see Fig. 12) to accommodate a hinge portion 305 of the cassette base 302.

A tissue support 350 (e.g., flat piece of perforated, dimpled metal as described above) is provided to the plate 330 for engaging and holding a tissue to be prepared. Also, a spacer 315 (e.g., see Figs. 11, 12, and 13A) is provided within the chamber 303 of the cassette base 302 for engaging and holding a tissue T to be prepared as well as for adjusting the depth of the chamber 303 and hence the thickness of the tissue sample to be prepared.

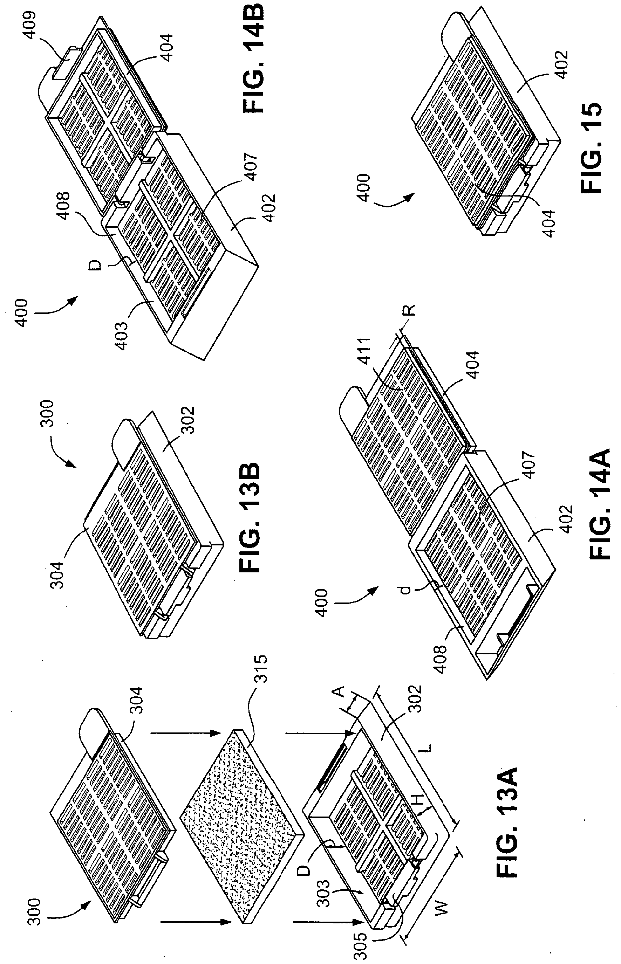

Specifically, as shown in Fig. 13A, the spacer 315 includes the same length and width of the chamber 303 so it can be aligned and maintained within the chamber 303, e.g., by a friction fit. The thickness of the spacer 315 may be selected based on the desired thickness of the tissue sample to be prepared. The chamber 303 of a conventional cassette has a depth D (see Fig. 13A) of about 5 mm (e.g., measured from the top edge of chamber side wall to the lower surface of the chamber). In an embodiment, the spacer 315 may have a thickness of about 3.5 mm, which provides a cassette depth of about 1.5 mm when inserted in the chamber 303. It should be appreciated, however, that the spacer 315 may have any suitable thickness between 0.1 and 4.5 mm to provide any suitable chamber depth, and hence allow any suitable tissue sample thickness between 0.1 and 4.5 mm to be prepared.

The top surface of the side walls defining the cassette chamber provide a flat-cutting surface or knife guiding surface 344 against which a grossing knife or scalpel bears when the tissue is being cut.

During grossing, a tissue T to be sampled is positioned on the spacer 315 within the cassette base 302 and the cassette base 302 is positioned within the depression 345 in the second plate 340 (e.g., see Fig. 11). The forceps 20 are manually held to clamp the tissue T between the plate 330 and the cassette base 302 and effectively hold the tissue T in place (see Fig. 12). As shown in Fig. 12, the blade B of a knife or scalpel is placed against and slid along the cutting surface 344 provided by the cassette base 302 to cut the tissue disposed in the chamber 303 of the cassette base 302 from the remainder of the tissue and provide a thin tissue specimen of generally uniform thickness (i.e., about a thickness t as shown in Fig. 12 which is the depth of the chamber with the spacer). As noted above, the depth of the chamber and hence the thickness of the tissue specimen may be adjusted by adjusting the thickness of the spacer 315.

Fig. 13A illustrates a cassette 300 with a spacer 315, and Fig. 13B illustrates the cassette with the lid 304 in a closed position to retain the tissue specimen therein. In an embodiment, the spacer 315 may be removed from the cassette base 302 before the lid 304 is attached and closed to retain the tissue specimen.

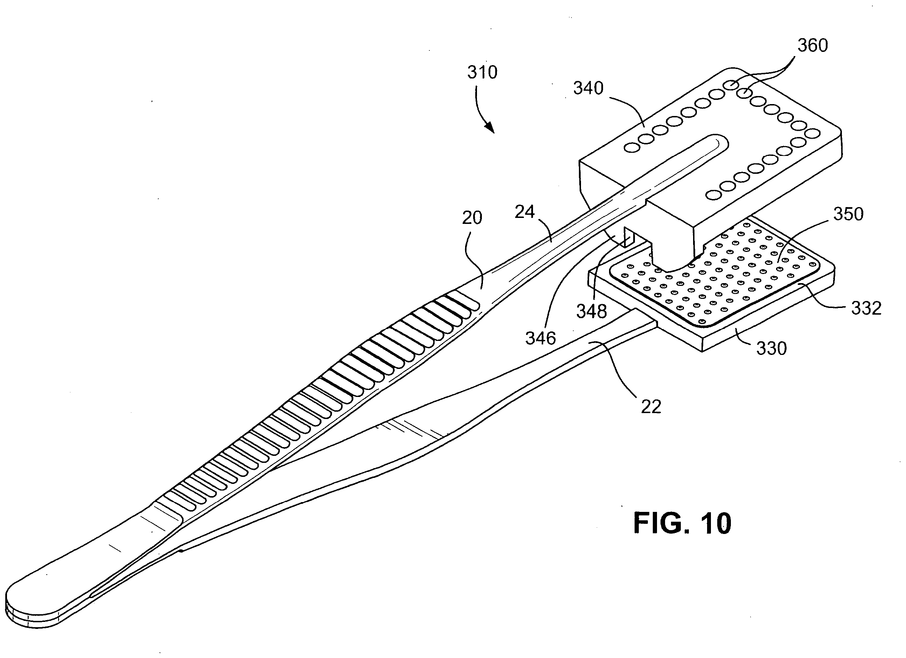

The second plate 340 is slightly longer than the first plate 330 and includes a ledge 346 adjacent a distal edge of the depression 345. After the blade B has passed across the cassette base 302 and hence through the tissue T, i.e., engagement of the blade B with the ledge 346 completes the cutting process. In use, the ledge 346 acts as a knife or blade stop to prevent the blade B from cutting the hand holding the forceps 20. As illustrated, the ledge 346 includes a recess 348 to receive an end portion of the forceps as the plates 330,340 are clamped towards one another in use (e.g., see Figs. 10-12).

Each of the plates 330, 340 includes a plurality of openings 360 therethrough (e.g., see Figs. 10 and 11). In addition, the textured tissue support 350 includes openings, the cassette base 302 includes a slotted arrangement with slots therethrough, and the spacer 315 is perforated or includes openings. Such openings/slots/perforations provide passages through the plates 330, 340/cassette 302/spacer 315/tissue support350 which allows a tissue clamped between the plate 330 and cassette base 302 to be adequately exposed to a fluid (e.g., gas, solution, etc. as shown in Fig. 7).

According to an embodiment of the present invention, a cassette is structured to provide a tailored chamber depth for providing a tailored thickness of the tissue sample. That is, the cassette is provided without a spacer and is formed (e.g., molded) to provide a non-conventional chamber depth for providing a non-conventional thickness of the tissue sample.

For example, Figs. 14A and 14B illustrate a cassette 400 according to an embodiment of the present invention. As illustrated, the cassette 400 includes a base 402 and a lid 404 hinged to one end of the base 402. The opposite end of the lid 404 includes a clip structure 409 for engaging an opening provided in the base 402, e.g., with a snap-fit.

The cassette base 402 includes a chamber 403 for a tissue sample. As illustrated, the bottom wall 407 of the chamber 403 is provided along the side walls 408 of the base 402 at a non-conventional or non-standard depth D so that the cassette base 402 can be used (e.g., with the grossing tool 310 as described above or with a grossing board as described below) to provide a tissue sample of a non-standard thickness.

The base of a standard or conventional cassette (such as the base 302 and lid 304 shown in Figs. 13A and 13B) has length L of about 4 cm, a width W of about 2.9 cm, side wall height H of about 0.5 cm, angled front wall length A of about 0.9 cm, and chamber depth D of about 0.5 cm.

The cassette base 402 according to an embodiment of the present invention as defined in claim 1 may be used for conventional embedding of a tissue specimen contained therein and creating a standard paraffin block, which can then be mounted in a microtome for sectioning. But the bottom wall 407 of the cassette base 402 is positioned to provide shallower chamber depths than the standard 5 mm depth. This arrangement allows different tissue thicknesses to be prepared for different processing methods.

As noted above, the conventional cassette promotes slicing tissue of about 5 mm thick and occasionally even thicker, which require longer processing time and are unsuitable for some tissue processing, e.g., microwave-based, rapid tissue processing or ultra-rapid tissue processing. A cassette according to the invention may be tailored to the specific processing method, i.e., cassette provides chamber depth to provide tissue specimen suitable for a particular processing method.

For example, Figs. 14A and 148 illustrate a cassette base 402 having chamber depth D in the range from 2.5 mm to 4.5 mm (e.g., about 3 mm). In such embodiment, the bottom wall 407 is spaced upwardly from the side walls (with respect to a standard cassette base in which the bottom wall is flush with the base of the side walls) by a distance d of from 0.5 mm to 4.9 mm (e.g., about 2 mm), e.g., see Fig. 14A. Such cassette base 402 may provide tissue sample thicknesses particularly useful for conventional tissue processing. Fig. 15 shows the cassette 400 with the lid 404 in a closed position.

It is also noted that the lid 404 of the cassette 400 includes a top wall 411 that is raised by a dimension R, e.g., about 1 mm, with respect to the lid base (see Fig. 14A) to provide sufficient space for the tissue specimen when enclosed within the cassette 400. A standard cassette lid includes a top wall that is substantially flush with the lid base (e.g., see Fig. 13A and 138), which may compress the tissue specimen within the cassette and create indentations of the lid in the tissue specimen.

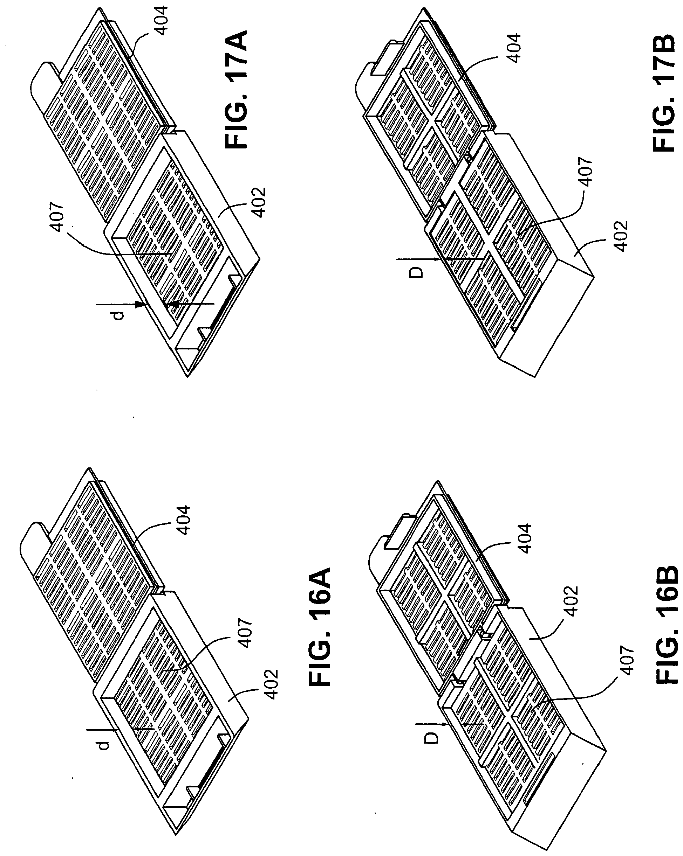

In another embodiment, as shown in Figs. 16A and 16B, the cassette base 402 may have a chamber depth D in the range of from 1 mm to 2 mm (e.g., about 1.5 mm). In such embodiment, the bottom wall 407 is spaced upwardly from the side walls by a distance d of from 3 mm to 4 mm (e.g., about 3.5 mm). Such cassette base may provide tissue sample thicknesses particularly useful for microwave-based, rapid tissue processing.

In another embodiment, as shown in Figs. 17A and 17B, the cassette base 402 may have a chamber depth D in the range of from 0.1mm to 1.0 mm (e.g., about 0.2 mm). In such embodiment, the bottom wall 407 is spaced upwardly from the side walls by a distance d of from 4 mm to 4.9 mm (e.g., about 4.8 mm). Such cassette base may provide tissue sample thicknesses particularly useful for ultra-rapid tissue processing.

In each embodiment of the cassette 400, a label (such as label 280 shown in Fig. 8D) identifying the tissue specimen (e.g., alphanumeric, barcode, or RFID) may be attached to a portion of the joined base and lid (e.g., along the angled front wall of the base).

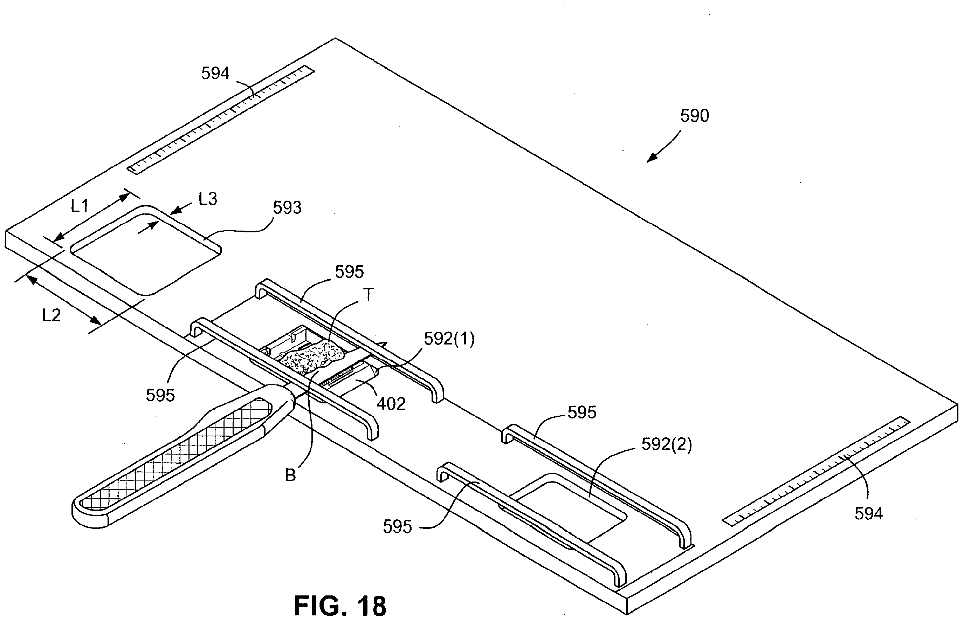

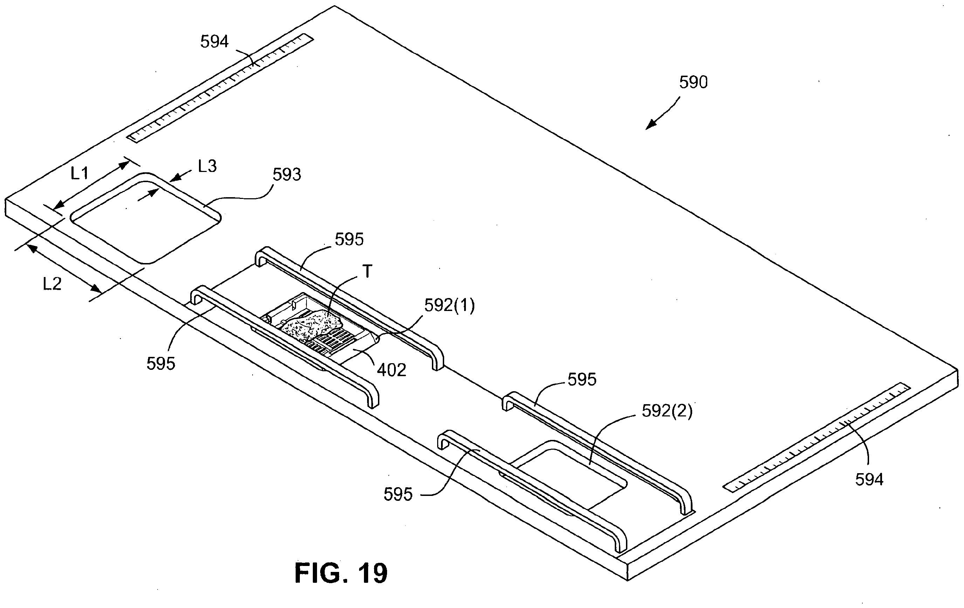

Figs. 18 and 19 illustrate a pathology grossing board 590 that may be used for preparing tissue samples, which is herein disclosed as useful to understand the present invention. As illustrated, the grossing board 590 includes two slots 592(1 ), 592(2), each structured to accommodate the base of a cassette (such as base 402 of cassette 400). In an embodiment, each slot includes similar width and depth dimensions (e.g., about 2.9 cm by about 0.5 cm) as the base of a cassette and includes the same or longer length dimension (e.g., at least about 4 cm) as the base of a cassette. The grossing board 590 also includes a larger slot 593 to section larger pieces of tissue before processing using the cassette, e.g., tissue at 4 mm thick. For example the larger slot may have dimensions LI of about 4.5 cm, L2 of about 4.5 cm, and L3 of about 4 mm. One or more rulers 594 may be provided adjacent to a processing surface of the board, e.g., for making initial measurements of a large piece of tissue. In addition, blade guides 595 are provided on each side of the two slots 592(1), 592(2) for guiding the knife or scalpel blade in use.

Fig. 18 illustrates cassette base 402 within slot 592(1) and the blade B of a knife or scalpel arranged to slide along the cutting surface provided by the cassette base 402 (and within the blade guides 595) to cut the tissue T disposed in the chamber of the cassette base from the remainder of the tissue and provide a thin tissue specimen of generally uniform thickness (e.g., about 1.5 mm using cassette of Figs. 16A and 168). The tissue may be held against the base by a light force applied downwardly, e.g., a gloved finger or flat-ended tool. In the illustrated embodiment, the hinge of the cassette and/or end of the blade guides 595 may act as a blade stop in use. Fig. 19 illustrates the cassette base 402 following slicing of the tissue.

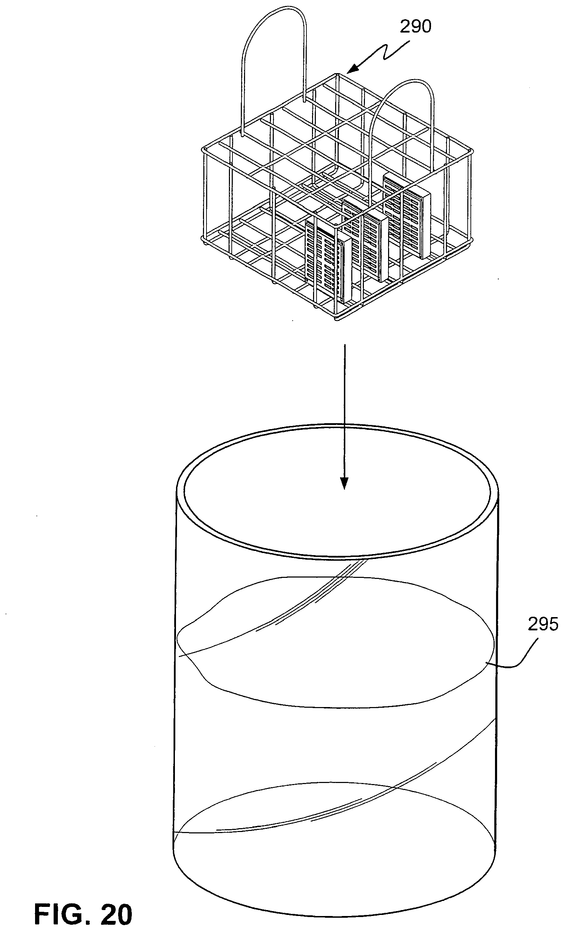

As shown in Fig. 20, the joined plates or closed cassette (i.e., joined base and lid) can be stored in a cassette-holding rack 290 and immersed in a solution 295. The solution may be used to wash the tissue (e.g., an aqueous solution), to preserve proteins or nucleic acids of the tissue (e.g., UM-FIX), orto initiate histological processing of the tissue (e.g., in a Tissue-Tek^{®} Xpress^{®} rapid tissue processor or a Tissue-Tek^{®} VIP^{™} vacuum infiltration processor). Preferred solutions are (i) buffered saline, (ii) formalin, (iii) a preservative solution of 80-95% methanol and 5-20% polyethylene glycol (PEG) (see U.S. Patent 7,138,226), and (iv) a hardening solution of 25-50% acetone, 30-55% isopropanol, 15-25% mineral oil or PEG, about 0.5% glacial acetic acid, and about 1% dimethyl sulfoxide (see U.S. Patent 7,470,401).

In stating a numerical range, it should be understood that all values within the range are also described (e.g., 0.5 mm to 4.5 mm includes every half-integer and integer value there between as well as all intermediate ranges such as half to two, one to three, two to four, and one to four). The term "about" may refer to the statistical uncertainty associated with a measurement or the variability in a numerical quantity which a person skilled in the art would understand does not affect operation of the invention or its patentability.

All modifications and substitutions that come within the meaning of the claims are to be embraced within their scope. A claim which recites "comprising" allows the inclusion of other elements to be within the scope of the claim; the invention is also described by such claims reciting the transitional phrases "consisting essentially of (i.e., allowing the inclusion of other elements to be within the scope of the claim if they do not materially affect operation of the invention) or "consisting of (i.e., allowing only the elements listed in the claim other than impurities or inconsequential activities which are ordinarily associated with the invention) instead of the "comprising" term. Any of these three transitions can be used to claim the invention.

It should be understood that an element described in this specification should not be construed as a limitation of the claimed invention unless it is explicitly recited in the claims. Thus, the granted claims are the basis for determining the scope of legal protection instead of a limitation from the specification which is read into the claims.

Moreover, no particular relationship between or among limitations of a claim is intended unless such relationship is explicitly recited in the claim (e.g., the arrangement of components in a product claim or order of steps in a method claim is not a limitation of the claim unless explicitly stated to be so).

The described embodiments should be considered only as illustrative, not restrictive, because the scope of the legal protection provided for the invention will be indicated by the appended claims rather than by this specification.

## Claims

1. A tissue cassette comprising:
(i) a base (402) having a length of 4 centimeters (cm) and a width of 2.9 cm, the base including side walls (408) having a side wall height H of 0.5 cm and a bottom wall (407) molded to the side walls (408) and an angled front wall length A of 0.9 cm to define a chamber adapted to receive a tissue sample; and
(ii) a lid (404) provided to the base (402) and adapted to cover the chamber (403) to retain the tissue sample within the chamber (403);
wherein the bottom wall (407) of the base (402) is in a position with respect to the side walls (408) upward from a bottom of the side wall (408) and extends as a rigid plane in the position from one side wall (408) to an opposite side wall (408) so that no portion of the bottom wall (407) is flush with the bottom of the side walls (408) to provide a chamber depth of from 0.5 mm to 4.9 mm measured inside the chamber from the bottom wall (407) to the top of the side walls (408).

2. A tissue cassette according to claim 1, wherein the chamber depth is in the range from 2.5 mm to 4.5 mm, from 0.5 mm to 2.5 mm, or wherein the chamber depth is 3 mm, 1.5 mm, or 0.5
mm.

3. A tissue cassette according to any one of claims 1-2, wherein the lid (404) includes a top wall (411) raised upward with respect to the lid base.

4. A tissue cassette according to claim 3, wherein the top wall (411) of the lid (404) is raised with respect to a lid base by about 1 mm.

5. A tissue cassette according to any of claims 1-4, wherein the base (402) and lid (404) are formed by molding.

6. A method for preparing tissues samples, the method comprising:
(a) clamping a base (402) of the tissue cassette of any of claims 1-5 and having a tissue sample (T) therein with forceps (20) between a pair of plates (330, 340) provided to respective ends of the forceps, wherein the first plate includes a cassette-receiving depression (345) structured to receive the base of the cassette and the second plate has a flat clamping surface (332) and
(b) drawing a blade of a grossing knife through the tissue sample (T) and along a tissue-cutting edge (344) to cut the tissue sample (T) disposed in the base (402) and provide a tissue specimen having a thickness substantially equal to a depth of the chamber (303) of the base.

## Patentansprüche

1. Gewebekassette umfassend:
(i) ein Unterteil (402) mit einer Länge von 4 Zentimetern (cm) und einer Breite von 2,9 cm, das Unterteil beinhaltet Seitenwände (408), die eine Seitenwandhöhe H von 0,5 cm haben, und eine Bodenwand (407), die an die Seitenwände (408) angegossen ist, und eine abgewinkelte Vorderwandlänge A von 0,9 cm, um eine Kammer zu definieren, die zur Aufnahme einer Gewebeprobe geeignet ist; und
(ii) einen Deckel (404), der an dem Unterteil (402) vorgesehen ist und geeignet ist, die Kammer (403) abzudecken, um die Gewebeprobe innerhalb der Kammer (403) zurückzuhalten;
wobei die Bodenwand (407) des Unterteils (402) in einer Position bezüglich der Seitenwände (408) aufwärts von einer Unterseite der Seitenwand (408) ist und sich als starre Ebene in der Position von einer Seitenwand (408) zu einer gegenüberliegenden Seitenwand (408) erstreckt, so dass kein Abschnitt der Bodenwand (407) mit der Unterseite der Seitenwände (408) bündig ist, um eine Kammertiefe von 0,5 mm bis 4,9 mm, gemessen im Inneren der Kammer von der Bodenwand (407) zur Oberseite der Seitenwände (408), bereitzustellen.

2. Gewebekassette gemäß Anspruch 1, wobei die Kammertiefe im Bereich von 2,5 mm bis 4,5 mm, von 0,5 mm bis 2,5 mm oder wobei die Kammertiefe 3 mm, 1,5 mm oder 0,5 mm ist.

3. Gewebekassette gemäß einem der Ansprüche 1 bis 2, wobei die Abdeckung (404) eine obere Wand (411) beinhaltet, die bezüglich des Deckelunterteils nach oben erhoben ist.

4. Gewebekassette gemäß Anspruch 3, wobei die obere Wand (411) der Abdeckung (404) bezüglich eines Deckelbodens um etwa 1 mm angehoben ist.

5. Gewebekassette gemäß einem der Ansprüche 1 bis 4, wobei das Unterteil (402) und die Abdeckung (404) ausgebildet sind durch Gießen.

6. Verfahren zum Vorbereiten von Gewebeproben, wobei das Verfahren umfasst:
(a) Klemmen eines Unterteils (402) der Gewebekassette nach einem der Ansprüche 1 bis 5, die eine Gewebeprobe (T) darin hat, mit einer Zange (20) zwischen einem Paar von Platten (330, 340), die an jeweiligen Enden der Zange vorgesehen sind, wobei die erste Platte eine Kassettenaufnahmevertiefung (345) beinhaltet, die strukturiert ist zum Aufnehmen des Unterteils der Kassette, und die zweite Platte eine flache Klemmfläche (332) hat und
(b) Ziehen einer Klinge eines Grobmessers durch die Gewebeprobe (T) und entlang einer Gewebeschneidkante (344), um die in dem Unterteil (402) angeordnete Gewebeprobe (T) zu schneiden und einen Gewebeprüfling mit einer Dicke bereitzustellen, die im Wesentlichen gleich einer Tiefe der Kammer (303) des Unterteils ist.

## Revendications

1. Cassette de tissu comprenant :
(i) une base (402) ayant une longueur de 4 centimètres (cm) et une largeur de 2,9 cm, la base comprenant des parois latérales (408) ayant une hauteur H de paroi latérale de 0,5 cm et une paroi inférieure (407) moulée sur les parois latérales (408) et une longueur A de paroi avant coudée de 0,9 cm afin de définir une chambre adaptée pour recevoir un échantillon de tissu ; et
(ii) un couvercle (404) prévu sur la base (402) et adapté pour recouvrir la chambre (403) afin de retenir l'échantillon de tissu à l'intérieur de la chambre (403) ;
dans laquelle la paroi inférieure (407) de la base (402) est dans une position par rapport aux parois latérales (408) remontant à partir d'un fond de la paroi latérale (408) et s'étend sous la forme d'un plan rigide dans la position allant d'une paroi latérale (408) à une paroi latérale (408) opposée de sorte qu'aucune partie de la paroi inférieure (407) ne soit à fleur par rapport au fond des parois latérales (408) afin de fournir une profondeur de chambre de 0,5 mm à 4,9 mm, mesurée à l'intérieur de la chambre, de la paroi inférieure (407) au sommet des parois latérales (408).

2. Cassette de tissu selon la revendication 1, dans laquelle la profondeur de chambre est dans la plage de 2,5 mm à 4,5 mm, de 0,5 mm à 2,5 mm, ou dans laquelle la profondeur de chambre est de 3 mm, de 1,5 mm ou de 0,5 mm.

3. Cassette de tissu selon l'une quelconque des revendications 1 à 2, dans laquelle le couvercle (404) comprend une paroi supérieure (411) en position verticale par rapport à la base de couvercle.

4. Cassette de tissu selon la revendication 3, dans laquelle la paroi supérieure (411) du couvercle (404) est levée par rapport à la base de couvercle d'environ 1 mm.

5. Cassette de tissu selon l'une quelconque des revendications 1 à 4, dans laquelle la base (402) et le couvercle (404) sont formés par moulage.

6. Procédé pour préparer des échantillons de tissu, le procédé comprenant les étapes consistant à :
(a) serrer une base (402) de la cassette de tissu selon l'une quelconque des revendications 1 à 5 et avoir un échantillon de tissu (T) à l'intérieur avec une pince (20) entre une paire de plaques (330, 340) prévues aux extrémités respectives de la pince, dans lequel la première plaque comprend un enfoncement de réception de cassette (345) structuré pour recevoir la base de la cassette et la seconde plaque a une surface de serrage plate (332), et
(b) tirer une lame d'un couteau de montage à travers l'échantillon de tissu (T) et le long d'une arête de coupe de tissu (344) pour couper l'échantillon de tissu (T) disposé dans la base (402) et fournir un échantillon de tissu ayant une épaisseur sensiblement égale à une profondeur de la chambre (303) de la base.
